# EUROPEAN PATENT SPECIFICATION

(11) **EP 0 392 227 B1**
(45) Date of publication and mention of the grant of the patent: **24.02.1993**
(21) Application number: 90105358.7
(22) Date of filing: 21.03.1990
(51) Int. Cl.: B65D 5/24

(54) **Container made of paper material or the like**
Behälter aus Papier oder dergleichen
Récipient en papier ou similaire

(30) Priority: 14.04.1989 IT 2014189
(43) Date of publication of application: 17.10.1990
(73) Proprietor: CARTOTECNICA POLIGRAFICA BIANCHI S.P.A., I-20121 Milano (IT)
(72) Inventor: Bianchi, Filippo, I-20154 Milano (IT)
(74) Representative: Liesegang, Roland, Dr.-Ing.

(56) References cited:
- FR-A- 2 471 923
- US-A- 3 606 078
- US-A- 4 173 655
- US-A- 4 208 007
- US-A- 4 238 069
- US-A- 4 687 130

## Description

The present invention generally relates to containers which are preferably made of a paper material or the like and used for containing products to be baked and for forming, once they are extracted from the oven, a package therefor. More particularly, the present invention relates to a container of the above mentioned kind having an improved structure both with respect to product retaining characteristics during and after the dwell time in the oven and with respect to the opening facility when it is extracted from the oven in order to easily take the product therefrom.

As known, on the market there are containers basically made of paper material, preferably paper board, possibly laminated with other materials and employed to contain the dough of a product to be baked and then sold as such in the same container. Such containers are generally formed from a single blank provided with folding lines forming the bottom wall, the two side walls and the two end walls of the container. Once the container is assembled from this blank, tabs provided on the side walls or on the end walls are bent over the container end walls and the side walls, respectively, and glued thereon to cause the so obtained container to retain its shape.

The more evident disadvantage of such containers is that, when the dough of product to be baked is placed in the container, before or during the dwell time in the oven, this dough can flow from the container in the areas in which it is provided with the glued tabs, because of the presence of discontinuities in the walls thereof.

Another disadvantage is that the used glues, when subjected to the oven heat, can deteriorate, emanate toxic gas, unglue and therefore the container can open, resulting in a flow out of the dough contained therein, this disadvantage being also promoted by the volume increase of the dough during leavening and baking steps thereof.

The US-A-4,687,130 discloses a container made of paper material or the like, of the type having a bottom wall, two side walls, two end walls obtained from a single blank and having a corner wall between each end wall and the adjacent side wall and a central folding line dividing it in two equal portions; a lug extending from the free edge of at least one of said equal portions of the corner walls; a tab extending from each end wall and defined by a folding line along which at least one C-shaped slit is cut; said lugs being insertable in the C-shaped slits by bellows-like folding said two equal portions of each corner wall along its central folding line and then bending the so folded portions over the outer surface of the associated end wall; the locking of the so bent corner walls with their lugs inserted in said C-shaped slits being obtained by bending thereon said tabs of the end walls so as to form a container provided with continuous walls without requiring glueing operations for holding the container in the assembled condition. In this container each of said tabs is locked in assembled position in a slit wherein a flap formed by the slit is bent downwardly ninety degrees to form a support for a top panel and an up-standing tab for insertion into a slot of the top panel.

US-A-4,208,007 discloses a paperboard tray including pairs of tuck flaps formed between the side and end panels of the tray, the tuck flaps being folded under the ends of the tray and rigidly locked in position to give the tray great rigidity and leakproof corners, the tuck flap tabs on the tuck flaps being retained in tab holes in an end flap portion of the tray and the end flap portion folding over and around the folded tuck flaps to doubly secure them in position. This tray has a great number of folding lines what results in a time consuming assembling operation of the tray.

The present invention aims at improving this type of containers by providing a container having a higher rigidity and leakproof characteristics than the known containers of this type.

According to the invention the container made of paper material or the like of the type having a bottom wall, two side walls, two end walls obtained from a single blank, comprises:
- a corner wall between each end wall and the adjacent said wall of the container and having a central folding line dividing it in two equal portions;
- a lug extending from the free edge of at least one of the equal portions of the corner walls;
- a tab extending from each end wall and defined by a folding line along which at least one C-shaped slit is cut;
- said lugs being insertable in said C-shaped slits by bellows-like folding said two equal portions of each corner wall along its central folding line and then bending the so folded portions over the outer surface of the associated end wall;
- the locking of the so bent corner walls with their lugs inserted in said C-shaped slits being obtained by bending thereon said tabs of the end walls so as to form a container provided with continuous walls without requiring glueing operations for holding the container in the assembled condition,
   and is characterized in that
- each of said C-shaped slits cut in the projecting tabs defines a lip which retains by snap action the associated tab in a folded-down position in order to retain the container in its assembled condition and impart a greater stability thereto.

The present invention will be now described in more detail in connection with preferred embodiments thereof, given by way of example only and therefore not intended in a limiting sense, illustrated in tha accompanying drawings, wherein:
Fig. 1 is a plan view of a blank for producing the container for products to be baked according to a first embodiment of the present invention;
Fig. 2 is a perspective view showing only in part the container in the first assembling step, in which the corner walls are bellows-like folded along their center folding lines;
Fig. 3 is a view similar to Fig. 2, but showing the container in the intermediate assembling step, in which the lugs extending from the corner walls are inserted in the C-shaped slits cut in the tabs of the end walls;
Fig. 4 is a view similar to Fig. 1, but showing the container in the assembled condition, in which the tab extending from the end wall is downwardly bent to lock the lugs of the corner walls in the associate C-shaped slits;
Figs 5a, 5b e 5c are sectional view taken along the line V-V of Fig. 4 and showing the manner in which the folding of the end wall tabs occurs, with the lips resulting from the C-shaped slits snapping therein in locking position;
Fig. 6 is a plan view of a blank used for forming the container according to a second embodiment of the invention;
Fig. 7 is a view similar to Fig. 2, but referred to the blank of Fig. 6;
Fig. 8 is a view similar to Fig. 3, but referred to the blank of Fig. 6;
Fig. 9 is a view similar to Fig. 4, but referred to the blank of Fig. 6;
Fig. 10 is a plan view of a blank used for forming the container according to a third embodiment of the invention;
Fig. 11 is a perspective view of the container obtained from the blank of Fig. 10;
Fig. 12 is a detailed sectional view taken along the line XII-XII of Fig. 11;
Fig. 13 is a plan view of a blank used for forming the container according to a fourth embodiment of the invention;
Fig. 14 is a view similar to Fig. 6, but referred to the blank of Fig. 13;
Fig. 15 is a view similar to Fig. 7, but referred to the blank of Fig. 13; and
Fig. 16 is a new similar to Fig. 8, but referred to the blank of Fig. 13.

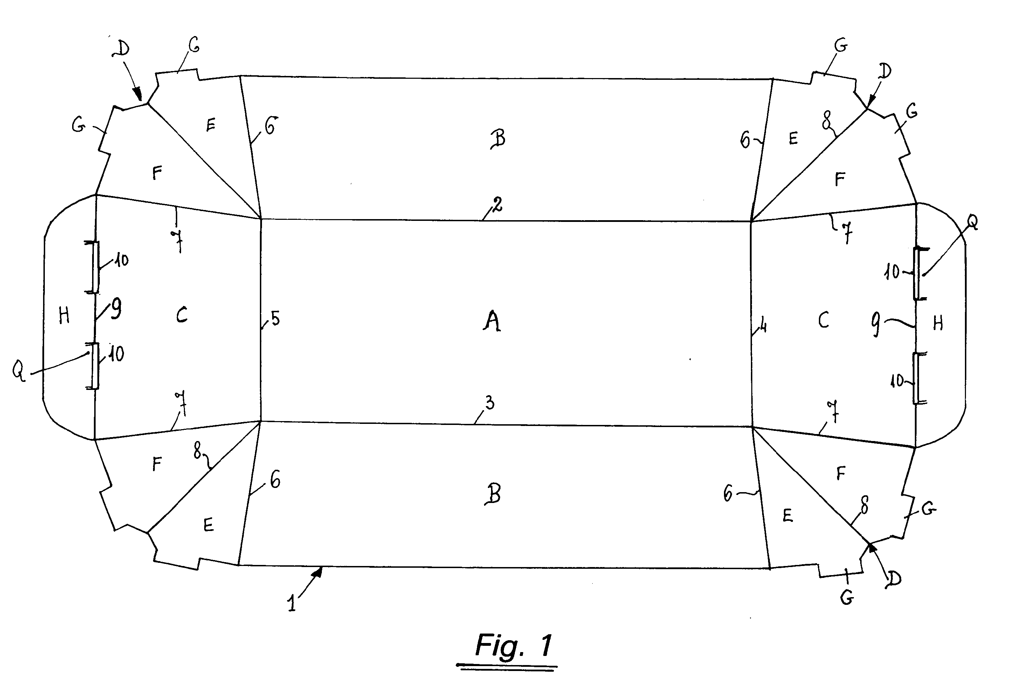

Referring now to Fig. 1, there is shown a first embodiment of a blank generally designated by 1 and used for forming a container for products to be baked. This blank has a center region A which is rettangular in shape and intended to form the bottom wall of the container.

Extending from the upper and lower sides of this region A are two regions B forming the side walls of the container and separated from the region A by two folding lines 2 and 3. Extending from the left and right sides of the center region A are two regions C forming the end walls of the container and separated from the center region A by two folding lines 4 and 5. Between each region C and each region B a corner region D is provided which is separated by the associated region B by a folding line 6 and from the associated region C by a folding line 7. These regions C are divided on the center line in two equal portions E and F by a folding line 8 starting from the intersection point of the folding lines 6 and 7 and forming the bisecting line of the angle included between the folding lines 6 and 7. Each of the two portions E and F has on the free edge thereof a projecting lug G, said lugs G being coextensive and arranged in such a position as to be specularly symmetrical and therefore to fit together when the corner regions D are folded along the folding lines 8.

Extending from the free edge of each region C is a tab H separated from the region C by a folding line 9. On this folding line 9 C-shaped slits 10 are cut, which form lips Q in the tab H.

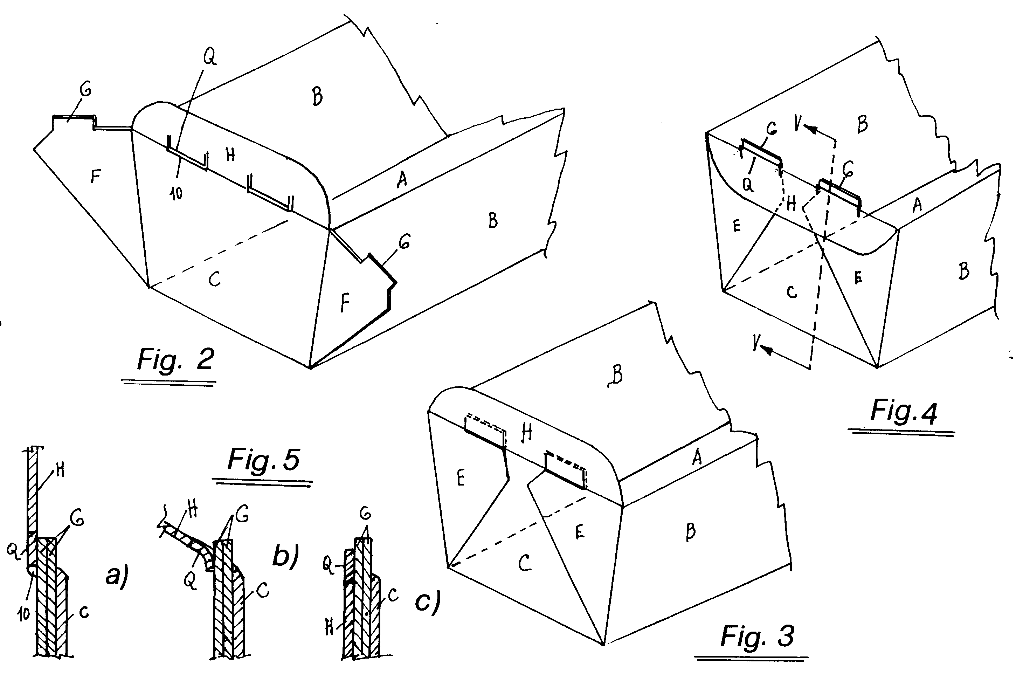

In Fig. 2 the first assembling step of the container is shown. As can be seen, in this first step the equal portions E and F of the corner regions D are bellows-like folded along the folding lines 8 until they are in contact to each other in such a manner that the lugs G fit to each other.

In Fig. 3 the second assembling step of the container is shown, in which the so folded corner regions D are bent over the regions C forming the end walls and the lugs G are inserted into the slits 10 in the tabs H, thereby lying inside the container.

Fig. 4 shows the final assembling step of the container in which the tabs H are downwardly folded so as to cover the two bent regions D and to remain in this position by the action exerted by the lips Q on the lugs G.

This action can best be seen in the Fig. 5a, 5b, 5c. In fact, in Fig. 5a corresponding to the assembling step shown in Fig. 3, the two lugs G of the corner regions D are inserted in the slits 10 of the tabs H. When the tabs H are downwardly folded, the lips Q of the C-shaped slits 10 bend as shown in Fig. 5b and when the tabs H are fully downwardly folded, the lips Q will elastically snap so as to be parallel to the lugs G and to rest against the outer lugs G, thereby contributing to hold the tabs H downwardly folded with the lugs G locked in the slits 10.

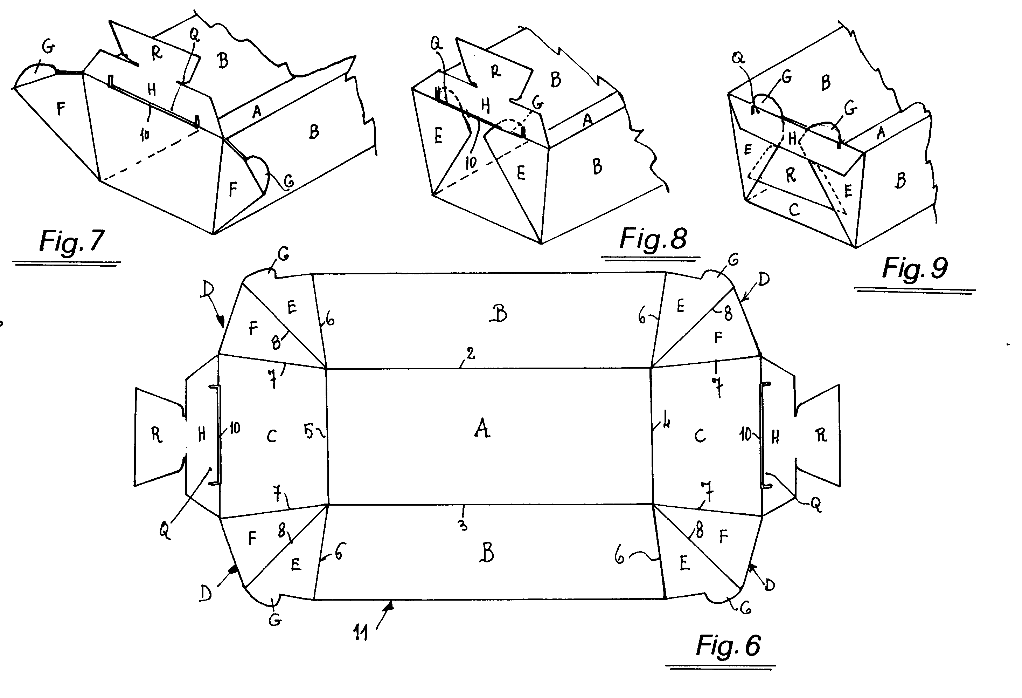

In Fig. 6 there is shown a second embodiment of a blank generally designated by 11 for forming the container for products to be baked according to the invention and which lends itself especially to cause the product to be better retained therein. In Fig. 6, the same portions as those of Fig. 1 are designated by the same references and therefore they will not be described in more detail.

As can be seen from Fig. 6, the only difference between this blank 11 and that of Fig. 1 is that, instead of two lugs G in each of the corner regions D only one thereof is provided, namely in the portions E of the corner regions D. The other difference is that, instead of two C-shaped slits 10, only one thereof is provided for each tab H. Furthermore, each tab H has a flap R having substantially a trapezoidal shape and extending from the center portion thereof.

In Fig. 7 the first assembling step of the container is shown, in which the equal portions E and F of the corner regions D are bellows-like folded along the folding lines 8 until they are in contact to each other with the lugs G extending from the portions E.

In Fig. 8 the second assembling step of the container is shown, in which the so folded corner regions D are bent over the regions C and the lugs G are inserted in the slits 10 of the tabs H.

Fig. 9 shows the final assembling step of the container, in which the tabs H are downwardly folded so as to cover the bent corner regions D and the flaps R are inserted below the portions F thereof.

The function of the flaps R is therefore to assure a better stability to the container.

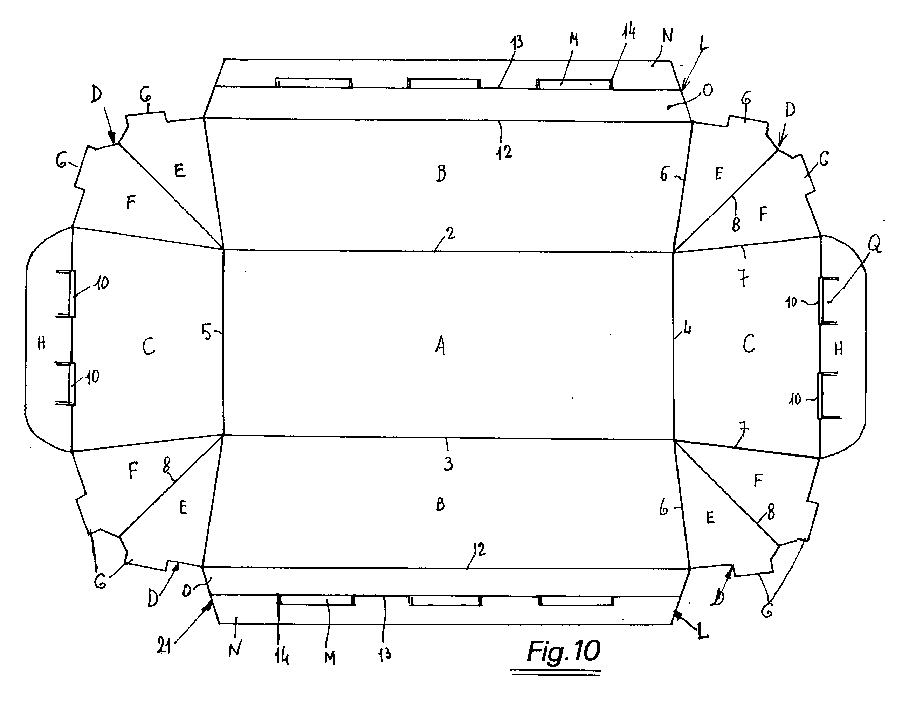

In Fig. 10 there is shown a third embodiment of a blank generally designated by 21 forming the container for products to be baked according to the invention. In Fig. 10, the same portions as those of Figs. 1 and 6 are designated by the same references and therefore they will not be described in more detail.

As can be seen from Fig. 10, each of the blank regions B forming the side walls of the container has a projecting tongue L which is substantially trapezoidal in shape and separated from the associated region B by a folding line 12. Each of the tongues L has also a center longitudinal folding line 13 dividing it in two strips N and O and, on this folding line 13, C-shaped slits 14 forming lips R are cut.

The purpose of the tongues L is to form a reinforcing rib along each side wall of the container. The purpose of this reinforcing rib is to prevent the side walls of the container from being warped or bent outwardly under the force exerted by the product in the container which, during the baking, leaves and therefore increases in volume.

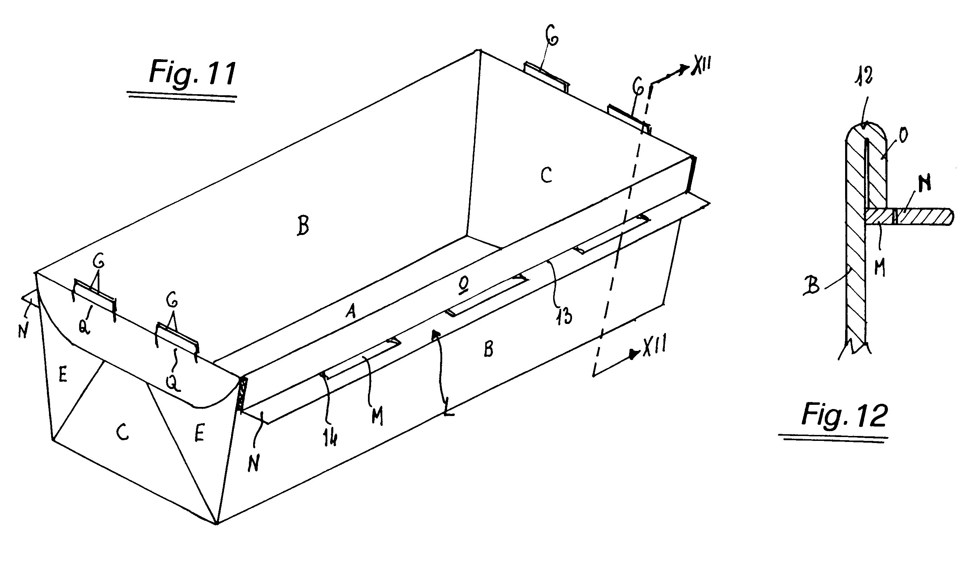

Fig. 11, wherein there is shown the container already assembled as described in connection with the preceding Figures, illustrates the manner in which the reinforcing ribs of the side walls B of the container are obtained. To this purpose, each inner strip O of the tongues L is first downwardly bent by 180° and glued against the associated side wall B of the container. Then, the outer strip N of each tongue L is bent outwardly by 90° so that the lips M formed by the slits 14 will snap under the strip O and will rest against the side wall B of the container, as shown in Fig. 12, thereby holding the strip N of tongues L substantially perpendicular to said side wall B.

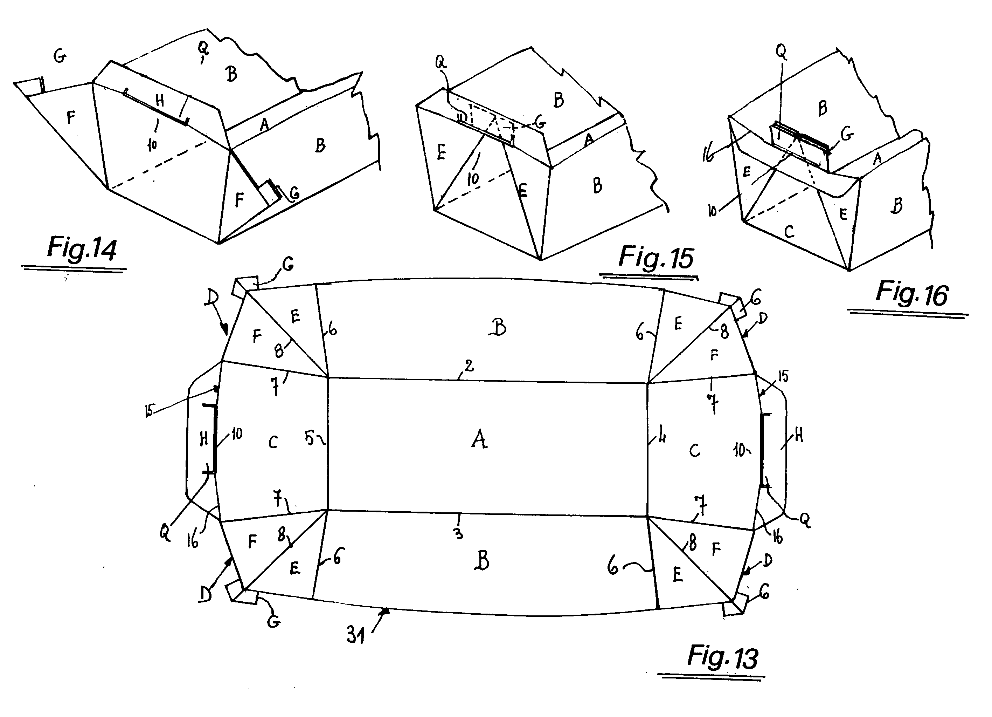

Fig. 13 illustrates a blank generally designated by 31 and used for forming a fourth embodiment of the container for products to be baked according to the invention. In Fig. 13 the same parts as those of Fig. 1 are designated with the same references and therefore they will not be described in more detail.

As can be seen from Fig. 13, the differences between this blank 31 and that of Fig. 6 are that the lugs G provided in the corner regions D are located at the folding lines 8 so as to form part of both the equal portions E and F of the corner regions D. Furthermore, the slits 10 have a lower length and are cut so that the tabs H are separated from the regions C of the blank by a segmented line 15 formed of two convergent segments 16 separated from each other by this cut 10. This conformation of the blank lends itself especially for increasing the strength of the lugs G because they have a folding inner line and when they are folded, this folding line forms a reinforcement therefor. Therefore, when the tabs H are folded, the lugs G are located behind the regions Q of the tabs H and firmly retain the latter in the folded position. Furthermore, the segmented line 15 contributes to retain the tabs H in a folded position. Another difference is that the free edges of the regions B are slightly curved rather then be straight.

In Fig. 14 the first assembling step of the container is shown, in which the equal portions E and F of the corner regions D are bellows like folded along the folding lines 8 until they are in contact to each other, with the lugs G also folded along the folding lines 8.

In Fig. 15 the second assembly step of the container is shown in which the so folded corner regions D are bent over the regions C and the so folded lugs G are inserted in the slits 10 of the tabs H.

Fig. 16 shows the final assembling step of the container in which the tabs H are downwardly bent along the segmented folding lines 15 so as to cover the bent corner regions D and with the lugs G inserted in the C-shaped slits and covered by the central lips Q of the latter.

As said, the container according to the present invention is preferably made of paper material, for example a card board. Alternatively, instead of the card board a laminate of paper and synthetic resin or paper and aluminium or else a metal foil, preferably aluminium, can be employed. Among the synthetic resins which lend better themselves to form these laminates, the various kinds of polyethylene and polypropylene can be cited, for example.

From the foregoing it can be easily seen that the container obtained by means of the blanks of the present invention is easy to be assembled and has not discontinuities in the various walls which could give rise to the above mentioned disadvantages. Furthermore, the container according to the invention can be readily disassembled where difficulties to take off the baked product should occur, without requiring cutting or tearing operations.

## Claims

1. Container made of paper material or the like of the type having a bottom wall, two side walls, two end walls obtained from a single blank, comprising:
- a corner wall (D) between each end wall (C) and the adjacent said wall (B) of the container and having a central folding line (8) dividing it in two equal portions (E,F);
- a lug (G) extending from the free edge of at least one of the equal portions (E,F) of the corner walls (D);
- a tab (H) extending from each end wall (C) and defined by a folding line along which at least one C-shaped slit (10) is cut;
- said lugs (G) being insertable in said C-shaped slits (10) by bellows-like folding said two equal portions (E,F) of each corner wall (D) along its central folding line (8) and then bending the so folded portions over the outer surface of the associated end wall (C);
- the locking of the so bent corner walls (D) with their lugs (G) inserted in said C-shaped slits (10) being obtained by bending thereon said tabs (H) of the end walls (C) so as to form a container provided with continuous walls without requiring glueing operations for holding the container in the assembled condition,
characterized in that
each of said C-shaped slits (10) cut in the projecting tabs (H) defines a lip (Q) which retains by snap action the associated tab (H) in a folded-down position in order to retain the container in its assembled condition and impart a greater stability thereto.

2. Container according to claim 1, characterized in that said tab (H) of each end wall (C) is provided with a flap (R) to be inserted below said folded corner walls (D) when the container is fully assembled in order to impart a greater stability to the assembled container.

3. Container according to claim 1, characterized in that each side wall (B) of the container is provided along its free edge with a projecting tongue (L) defined by an inner folding line (12) and divided in two longitudinal strips (N,O) by an intermediate folding line (13) along which C-shaped slits (14) are cut, said tongue (L), once the inner strip (O) has been bent by 180° along the said inner folding line (12) and its outer strip (N) has been bent by 90° along said intermediate folding line (13), forming a stiffening rib for the side walls (B) of the container.

4. Container according to claim 1, characterized in that said folding lines defining the projecting tabs (H) of the side walls (C) are formed of two segments (15,16) converging in said C-shaped slits (10) so as to better retain said projecting tabs (H) in their folded-down position due to the end walls (C) being convexed.

5. Container according to anyone of the preceding claims, characterized in that said side walls (B) have the free edges curved in shape.

## Patentansprüche

1. Behälter aus Papier oder dgl. mit einem Boden, zwei Seitenwänden, zwei aus einem Stanzstück erhaltene Endwände, bestehend aus:
- einer Eckwand (D) zwischen jeder Endwand (C) und der angrenzenden Behälterwand (B) mit einer mittleren Faltlinie (8), die den Behälter in zwei gleiche Teile (E, F) unterteilt;
- einen Vorsprung (G), der sich von der freien Ecke von wenigstens einem der beiden gleichen Teile (E, F) der Eckwände (D) erstreckt;
- eine Zunge (H), die sich von jeder Endwand (C) aus erstreckt und von einer Faltlinie begrenzt wird, entlang welcher zumindest eine C-förmige Spalte (10) eingekerbt ist;
- wobei die Vorsprünge (G) in die C-förmigen Schlitze (10) durch balgartiges Falten der beiden gleichen Teile (E, F) von jeder Eckwand (D) entlang seiner mittleren Faltlinie (8) eingefügt werden können und dann die auf diese Weise gefalteten Teile über die Außenfläche der zugeordneten Endwand ( C ) umgebogen werben;
- wobei das Festhalten der auf diese Weise gebogenen Eckwände (D) mit ihren in die C-förmigen Schlitze (10) eingefügten Vorsprüngen (G) durch das Darüberbiegen der Zungen (H) der Endwände (C) derart erreicht wird, daß ein Behälter entsteht, der mit durchgehenden Wänden versehen ist, ohne daß ein Verkleben nötig wäre, um den Behälter in dem zusammengebauten Zustand zu belassen,
dadurch gekennzeichnet, daß
jeder in die vorspringenden Zungen (H) eingekerbte C-förmige Schlitz (10) eine Lippe (Q) bildet, die die zugeordnete Zunge (H) durch eine Schnappwirkung in einem nach unten gefalteten Zustand festhält, um den Behälter selbst in der zusammengebauten Gestalt festzuhalten und ihm eine größere Standhaftigkeit zu verleihen.

2. Behälter nach Anspruch 1, dadurch gekennzeichnet, daß die Zunge (H) von jeder Endwand (C) mit einer Patte (R) versehen ist, die unterhalb den gefalteten Eckwänden (D) eingeschoben wird, wenn der Behälter vollständig zusammengebaut ist, um demselben eine größere Standhaftigkeit zu verleihen.

3. Behälter nach Anspruch 1, dadurch gekennzeichnet, daß jede Seitenwand (B) des Behälters ihrem freien Rand entlang mit einer abstehenden Zunge (L) versehen ist, die durch eine innere Faltlinie (12) begrenzt und durch eine Zwischenfaltlinie (13) in zwei Längsstreifen (N, O), entlang welcher C-förmige Schlitze (14) angebracht sind, aufgeteilt ist, wobei die Zunge (L), nachdem der innere Streifen (O) um 180° entlang der inneren Faltlinie (12) und ihr äußerer Streifen (N) um 90° entlang der Zwischenfaltlinie (13) umgelegt wurde, eine Verstärkungsrippe für die Seitenwände (B) des Behälters bildet.

4. Behälter nach Anspruch 1, dadurch gekennzeichnet, daß die die abstehenden Zungen (H) der Seitenwände (C) begrenzenden Faltlinien aus zwei Abschnitten (15, 16) gebildet sind, die in C-förmige Schlitze (10) konvergieren, um die abstehende Zunge (H) besser in ihrer umgebogenen Stellung aufgrund der konvexen Endwände (C) zu halten.

5. Behälter nach einem der vorausgehenden Ansprüche, dadurch gekennzeichnet, daß die Seitenwände (B) gebogene freie Ränder aufweisen.

## Revendications

1. Récipient en papier ou analogue avec une paroi de fond, deux parois latérales, deux parois d'extrémité obtenues à partir d'un seul flan, comportant:
- une paroi d'angle (D) entre chaque paroi d'extrémité (C) et la paroi adjacente (B) du récipient et ayant une ligne de pliage centrale (8) qui la sépare en deux volets égales (E, F);
- un rabat (G) s'étendant du bord libre d'une au moins des volets égales (E,F) des parois d'angle (D);
- une languette (H) s'étendant de chaque paroi d'extrémité (C) et délimitée par une ligne de pliage le long de laquelle au moins une fente en forme de C (10) est découpée;
- lesdits rabats (G) pouvant être introduits dans lesdites fentes en forme de C (10) en pliant à soufflet lesdites deux volets égales (E, F) de chaque paroi d'angle (D) le long de leur ligne de pliage centrale (8) et puis en pliant les parties ainsi pliées sur la surface externe de la paroi d'extrémité (C) associée;
- le blocage des parois d'angle (D) ainsi pliées avec leurs rabats(G) introduits dans lesdites fentes en forme de C (10) étant obtenue en pliant sur elles lesdites languettes des parois d'extrémité (C) de façon à former un récipient pourvu des parois continues sans avoir besoin d'opérations de collage pour maintenir le récipient dans la condition assemblée,
caractérisé en ce que chacune desdites fentes en forme de C (10) découpées dans les languettes (H) forme une lèvre (Q) qui retiens la languette (H) associée par une action de déclencement dans une position repliée en bas de façon à maintenir le récipient dans sa condition assemblée et à lui donner une plus grande stabilité.

2. Récipient selon la revendication 1, caractérisé en ce que ladite languette (H) de chaque paroi d'extrémité (C) est pourvue d'une ailette (R) destinée à être introduite au dessous desdites parois d'angle pliées (D) lorsque le récipient est completement assemblé de façon à donner une plus grande stabilité au récipient assemblé.

3. Récipient selon la revendication 1, caractérisé en ce que chaque paroi latérale (B) du récipient, est pourvue le long de son bord libre d'une languette saillante (L) délimitée par une ligne de pliage intérieure (12) et divisée en deux bandes longitudinales (N, O) par une ligne de pliage intermédiaire (13) le long de laquelle des fentes en forme de C (14) sont découpées, ladite languette (L), lorsque la bande intérieure (O) a été pliée par 180° le long de ladite ligne de pliage intérieure (12) et la bande extérieure (N) a été pliée par 90° le long de ladite ligne de pliage intermediaire (13), forme une nervure raidissante pour les parois latérales (B) du récipient.

4. Récipient selon la revendication 1, caractérisé en ce que lesdites lignes de pliage qui forment les languettes saillantes (H) des parois latérales (C), sont formées par deux segments (15, 16) qui convergent vers lesdites fentes en forme de C (10) de façon à mieux y retenir lesdites languettes saillantes (H) dans leur position repliée en bas grâce aux parois d'extrémités (C) qui sont d'une configuration convexe.

5. Récipient selon l'une quelconque des revendications précédentes, caractérisé en ce que lesdites parois latérales (B) ont des bords libres courbés.
